# DEMANDE DE BREVET EUROPEEN

(11) **EP 1 291 327 A2**
(43) Date de publication de la demande: **12.03.2003**
(21) Numéro de dépôt: 02292208.2
(22) Date de dépôt: 09.09.2002
(51) Int. Cl.: C02F 9/14, C02F 1/66, B01D 61/02, B01D 61/14

(54) **Procédé de traitement d'un effluent tel qu'un effluent agricole ou un effluent industriel, par digestion anaérobie**

(30) Priorité: 10.09.2001 FR 0111884
(71) Demandeur: Algotec International S.A.R.L., 29710 Ploneis (FR)
(72) Inventeur: Roussel, Jean, 29700 Plomelin (FR)
(74) Mandataire: Maillet, Alain

(57) **Abrégé**

La présente invention concerne un procédé de traitement d'un effluent tel qu'un effluent agricole ou un effluent industriel par digestion anaérobie et du type consistant à :
- introduire l'effluent dans au moins une cuve (C1, C2) après séparation de la partie solide de l'effluent par un séparateur (S1), pour permettre une première extraction des composés azotés gazeux,
- transférer l'effluent vers au moins une cuve (C2) au travers d'un préfiltre (PF1) chargé de retenir la matière organique nécessaire à la méthanisation pour la transférer dans un réacteur de méthanisation (C5) fonctionnant par digestion anaérobie.

Le procédé est remarquable en ce qu'il comprend en outre l'étape de :
- concentrer la partie liquide résiduelle de l'effluent par filtration dans une unité d'ultrafiltration (UF1) et/ou une de nanofiltration (NF2) par osmose inverse dans au moins une cuve (C3) raccordée en aval de la cuve (C1, C2).

## Description

La présente invention concerne un procédé de traitement d'un effluent tel qu'un effluent agricole ou un effluent industriel, par digestion anaérobie permettant d'obtenir, d'une part, la séparation successive de ses composants et, d'autre part, la production de méthane. L'invention concerne également l'installation de traitement qui est mise en oeuvre pour traiter ledit effluent.

De manière connue, un procédé classique de traitement par fermentation d'un effluent s'effectue de la manière suivante : l'effluent est d'abord admis de façon continue dans un séparateur qui sépare une matière organique grossière de la partie liquide de l'effluent. Celle-ci est ensuite introduite régulièrement dans un réacteur dont la température et le niveau de pH sont régulés de manière à ce que l'effluent puisse subir, sous l'effet d'un brassage puissant, une digestion anaérobie. Au cours de cette fermentation, sont produits notamment du gaz méthane, du gaz carbonique ainsi que des boues digérées qui sont soutirées du réacteur.

L'effluent qui est introduit dans le réacteur comprend une partie en eau en forte proportion qui ne participe en rien à la digestion anaérobie de l'effluent. Il faut ainsi chauffer tout le volume de l'effluent introduit dans le réacteur, et par conséquent dimensionner convenablement le volume de celui-ci.

Aussi, le but de la présente invention est donc de proposer un procédé de traitement d'un effluent par digestion anaérobie qui permette d'extraire une proportion importante de la partie du volume initial de l'effluent avant d'opérer sa digestion anaérobie dans le réacteur en sauvegardant les qualités fertilisantes des boues digérées. A volume identique d'effluent initial, la consommation d'énergie nécessaire au chauffage de l'effluent est réduite. La taille du réacteur peut également être réduite.

A cet effet, le procédé de traitement d'un effluent tel qu'un effluent agricole ou un effluent industriel par digestion anaérobie, le procédé étant du type consistant à:
- introduire l'effluent dans au moins une cuve (C1, C2) après séparation de la partie solide de l'effluent par un séparateur, pour permettre une première extraction des composés azotés gazeux,
- transférer l'effluent vers au moins une cuve (C2) au travers d'un préfiltre chargé de retenir la matière organique nécessaire à la méthanisation pour la transférer dans un réacteur de méthanisation (C5) fonctionnant par digestion anaérobie, le procédé est remarquable en ce qu'il comprend en outre l'étape de :
- concentrer la partie liquide résiduelle de l'effluent par filtration dans une unité d'ultrafiltration et/ou une unité de nanofiltration par osmose inverse dans au moins une cuve (C3) raccordée en aval de la cuve (C1, C2).

Selon une autre caractéristique du procédé, pendant l'étape de concentration de l'effluent dans la cuve (C3), la cuve (C2) est utilisée comme réservoir tampon.

Selon une autre caractéristique du procédé, le perméat rejeté par l'unité d'ultrafiltration est séquentiellement transféré dans le préfiltre pour participer à son rétrolavage avant d'être transféré dans le réacteur de méthanisation (C5).

Selon une autre caractéristique du procédé, le perméat rejeté par l'unité d'ultrafiltration est séquentiellement transféré dans le réacteur de méthanisation (C5).

Selon une autre caractéristique du procédé, il met en oeuvre un laveur chimique collectant les composés gazeux produits par l'effluent dans les cuves (C1-C3), la solution ammoniacale récupérée en sortie du laveur chimique étant injectée séquentiellement dans la cuve (C1) et/ou (C2).

Selon une autre caractéristique du procédé, il met en oeuvre une boucle de circulation associée à la cuve (C1) et/ou (C2) et qui est pourvue notamment d'un dispositif de régulation de pH utilisant une solution basique provenant du lavage de membranes de nanofiltration de l'unité de nanofiltration par osmose inverse.

L'installation mettant en oeuvre le procédé de traitement est également couverte dans l'invention.

Une telle installation de traitement d'un effluent tel qu'un effluent agricole ou un effluent industriel par digestion anaérobie, l'installation comportant au moins une cuve (C1, C2) destinée à permettre une première extraction des composés azotés gazeux, la cuve (C1, C2), raccordée à un préfiltre chargé de retenir la matière organique nécessaire à la méthanisation, le préfiltre étant raccordé à un réacteur de méthanisation (C5) fonctionnant par digestion anaérobie, est remarquable en ce qu'elle comprend en outre une cuve (C3) raccordée en aval de la cuve (C1, C2) ainsi qu'une unité d'ultrafiltration et/ou une unité de nanofiltration par osmose inverse destinée à permettre la concentration par filtration de la partie liquide résiduelle de l'effluent dans ladite cuve (C3).

Selon une autre caractéristique de l'installation, la collecte du perméat de l'effluent filtré par l'unité d'ultrafiltration est raccordée à la cuve (C3).

Selon une autre caractéristique de l'installation, la collecte du retentat, de l'effluent filtré par l'unité de nanofiltration par osmose inverse est raccordée à la cuve (C3) permettant la circulation en boucle de l'effluent dans la cuve (C3).

Selon une autre caractéristique de l'installation, elle comporte un laveur chimique collectant les composés gazeux produits par l'effluent dans les cuves (C1 - C3).

Selon une autre caractéristique de l'installation, une vanne de type motorisé est interposée sur le circuit de retour du retentat filtré vers la cuve (C3) pour permettre la régulation de la pression du retentat filtré à l'intérieur des membranes de filtration de l'unité de nanofiltration par osmose inverse.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente un schéma d'une installation mettant en oeuvre le procédé pendant la digestion de l'effluent selon l'invention, et
la Fig. 2 représente un schéma d'une installation mettant en oeuvre le procédé pendant le rinçage de l'installation selon l'invention.

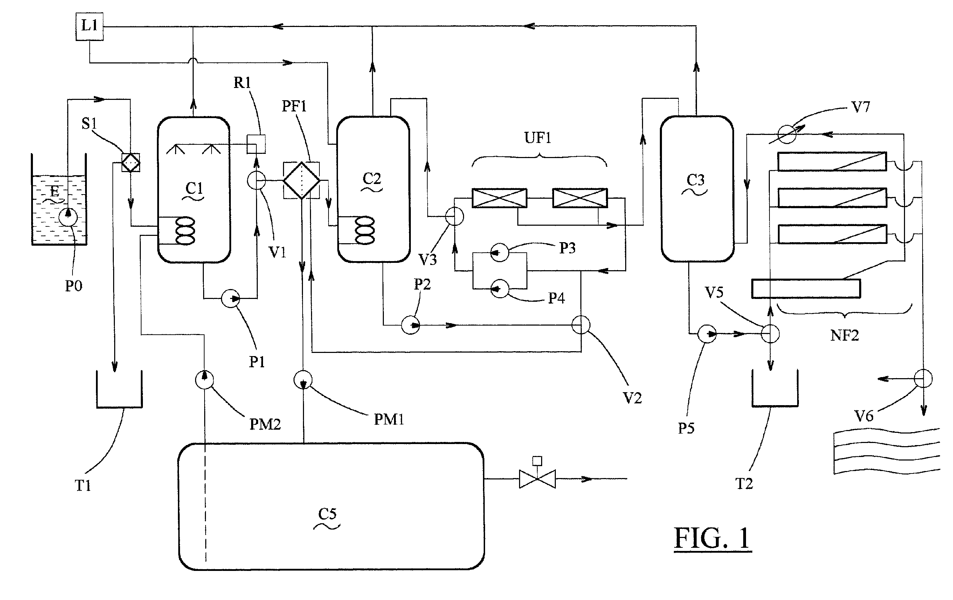

L'installation de traitement d'un effluent par digestion anaérobie représentée à la Fig. 1 comprend notamment trois cuves C1-C3 de traitement de l'effluent qui sont raccordées en série, un réacteur de méthanisation C5, une unité d'ultrafiltration UF1 interposée entre les cuves C2 et C3, ainsi qu'une unité de nanofiltration NF2 par osmose inverse raccordée en aval de la cuve C3.

De manière plus détaillée, l'installation comporte une pompe P0 de relèvement de l'effluent E, destinée à être traitée dans l'installation, vers un séparateur S1. Le séparateur S1 permet de séparer la fraction solide de l'effluent constituée de matière organique grossière afin qu'elle puisse être évacuée dans un conteneur T1 à la Fig. 1. Le séparateur S1 est également raccordé à la première cuve C1 permettant à la fraction liquide de l'effluent d'être introduite dans ladite cuve C1.

La première cuve C1 est de type isotherme et comprend des moyens de chauffage tels que des résistances électriques.

La première cuve C1 a pour fonction de permettre une première extraction des composés azotés gazeux. Elle comporte à cet effet une boucle de circulation comprenant une pompe P1 soutirant l'effluent en point bas de la première cuve C1 pour le pulvériser au travers de buses disposées en tête de cuve C1 afin de favoriser le dégazage de l'effluent dans la première cuve C1. La boucle de circulation comporte encore un dispositif de régulation R1 de pH de l'effluent et qui est muni d'une sonde et d'une pompe doseuse. Ce dispositif de régulation R1 de pH permet notamment de relever le pH de l'effluent à une valeur égale à pH 12, par adjonction d'une solution basique provenant du lavage de membranes de nanofiltration de l'unité de nanofiltration NF2 par osmose inverse décrite par la suite.

Un dispositif de ventilation forcée monté en tête de cuve C1 permet d'extraire les composés gazeux produits par l'effluent dans la première cuve C1 pour les transférer dans un laveur chimique L1. Celui-ci est chargé d'extraire les composés azotés, en utilisant une solution acide provenant également du lavage de membranes d'ultrafiltration. La solution ammoniacale peut être récupérée en sortie du laveur chimique L1 pour être injectée de préférence séquentiellement dans une seconde cuve C2 tampon du même type que la première cuve C1.

Une vanne motorisée V1, de type à trois voies, est installée sur la boucle de circulation de la première cuve C1 et permet de sélectionner au choix le circuit de recyclage de l'effluent dans ladite cuve C1, dans sa première position ou un circuit de décharge vers un préfiltre PF1, dans sa seconde position. Ce préfiltre PF1 est de préférence de type automatique à rétrolavage. Il permet de retenir la matière organique nécessaire à la méthanisation qui peut être transférée par une pompe PM1 vers le réacteur de méthanisation C5 fonctionnant par digestion anaérobie.

Celui-ci est constitué d'une cuve isotherme et comporte des moyens de chauffage tels que des résistances électriques. Une pompe PM2 permet de recueillir la partie liquide contenue dans le réacteur de méthanisation C5 pour l'injecter dans la première cuve C1 afin de poursuivre l'extraction des composés azotés gazeux contenue dans cette partie liquide.

Le préfiltre PF1 est également raccordé à la seconde cuve C2 permettant le transfert de l'effluent filtré au travers du préfiltre PF1 dans ladite cuve C2.

Une pompe de gavage P2 raccordée en aval de la seconde cuve C2 permet de soutirer l'effluent stocké dans la seconde cuve C2 afin qu'il soit conduit vers une vanne motorisée V2, de type à trois voies. Celle-ci autorise séquentiellement le transfert de l'effluent, soit vers le préfiltre PF1 qui participe alors au rétrolavage du préfiltre PF1 avant d'être transféré par la pompe PM1 dans le réacteur de méthanisation C5, dans sa première position, soit vers une unité d'ultrafiltration UF1, dans sa seconde position. Cette unité d'ultrafiltration UF1 possède un pouvoir de filtration réglé de préférence au voisinage de 200 microns.

Dans une variante de réalisation non représentée, l'une des sorties de la vanne motorisée V2 est raccordée directement au réacteur de méthanisation C5. Dans cette variante de réalisation, l'effluent ne transite donc pas par le préfiltre PF1.

La pompe de gavage P2 est assistée par au moins une autre pompe P3 ou P4 lorsqu'elle débite dans l'unité d'ultrafiltration UF1. A la Fig. 1, deux pompes P3 et P4 montées en parallèle sont représentées. Elles permettent le maintien d'une vitesse adéquate de l'effluent dans les membranes de filtration de l'unité d'ultrafiltration UF1.

On remarque également la présence d'une vanne V3, de type à trois voies, installée en aval des pompes P3 et P4 et qui est raccordée en sortie, d'une part, à l'unité d'ultrafiltration UF1, dans sa première position et raccordée d'autre part, en tête de cuve C2, dans sa seconde position. Cette vanne V3 permet, soit la filtration en continu de l'effluent contenu dans la seconde cuve C2, soit le retour de l'effluent dans la seconde cuve C2.

La collecte du perméat de l'effluent filtré par l'unité d'ultrafiltration UF1 est raccordée en tête de cuve de la troisième cuve C3 qui est également du même type que la première cuve C1. Cette troisième cuve C3 est destinée à permettre la concentration de l'effluent qu'elle contient par extraction d'eau. Une pompe P5 permet à cet effet le soutirage de l'effluent contenu dans la troisième cuve C3 pour alimenter une unité de nanofiltration NF2 par osmose inverse. Cette unité de nanofiltration NF2 par osmose inverse pourvue de membranes de filtration est destinée à :
- séparer et concentrer le retentat organique de l'effluent,
- extraire la pigmentation éventuelle de l'effluent,
- éliminer les virus et les protéines,
- restituer une eau répondant aux critères de potabilité de l'eau édictés par l'Agence de l'Eau.

Cette unité de nanofiltration NF2 possède un pouvoir de filtration réglé de préférence au voisinage de 50 microns.

On remarquera également la présence d'une vanne V5, de type à trois voies; interposée entre la pompe P5 et l'unité de nanofiltration NF2 par osmose inverse et dont une première sortie est raccordée à l'unité de nanofiltration NF2 par osmose inverse, dans sa première position, et dont l'autre sortie est raccordée, dans sa seconde position, à un conteneur T2 qui est destiné à recevoir le concentré, sous la forme d'une solution fertilisante de type NPK, produit à l'issue de chaque cycle de concentration de l'effluent dans la troisième cuve C3.

La collecte du retentat, de l'effluent filtré par l'unité de nanofiltration NF2 par osmose inverse est raccordée à la troisième cuve C3 permettant la circulation en boucle de l'effluent dans la troisième cuve C3 pour le concentrer.

Une vanne V7 de type motorisé est interposée sur ce circuit de retour du retentat filtré vers la troisième cuve C3 et permet la régulation de la pression du retentat filtré à l'intérieur des membranes de filtration de l'unité de nanofiltration NF2.

L'eau produite par l'unité de nanofiltration NF2 par osmose inverse, sous l'effet de la pression hydraulique de la pompe P5, est canalisée par une vanne V6.

On remarquera encore que la production de gaz produits dans les seconde et troisième cuves C2 et C3 est également collectée vers le laveur chimique L1.

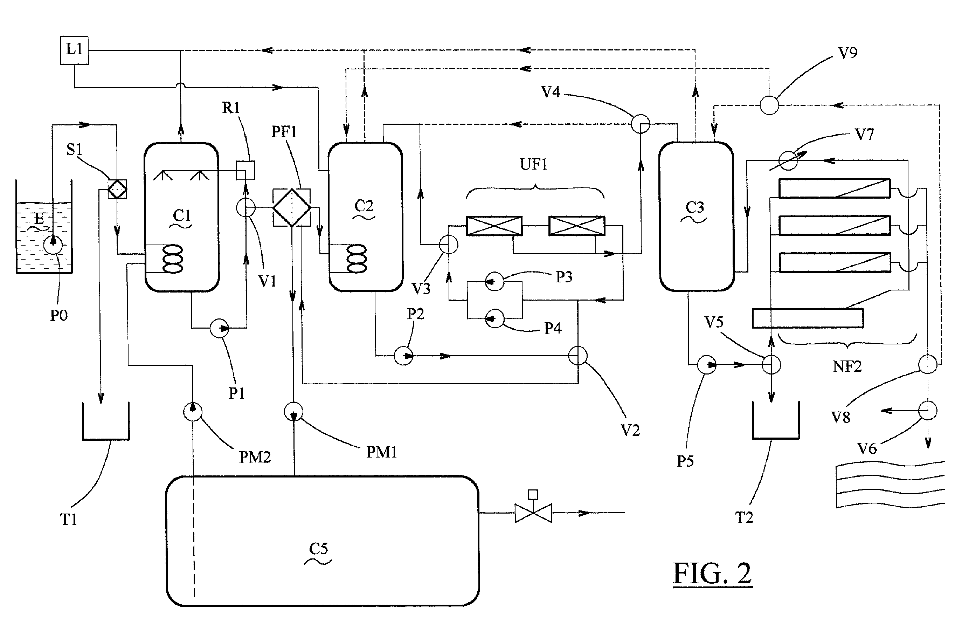

La Fig. 2 fait apparaître en traits interrompus les circuits de rinçage de l'installation de traitement de l'effluent.

Une vanne V8, de type à trois voies, est installée en amont de la vanne V6. Cette vanne V8 permet d'utiliser l'eau en provenance de l'unité de nanofiltration NF2 par osmose inverse comme eau de rinçage pour les seconde et troisième cuves C2 et C3. Une vanne V9 permet à cet effet de canaliser cette eau de rinçage, soit vers la seconde cuve C2, dans sa première position, soit vers la troisième cuve C3, dans sa seconde position.

On note également la présence d'une vanne V4, de type à trois voies, qui est installée sur le circuit de collecte du perméat de l'effluent filtré par l'unité d'ultrafiltration UF1. Cette vanne V4 permet, dans sa première position, de raccorder la collecte de l'unité d'ultrafiltration UF1 avec la troisième cuve C3, et dans sa seconde position, de la raccorder avec la seconde cuve C2 pour permettre son nettoyage.

L'ensemble des vannes V1-V9, des pompes P0-P5, les moyens de chauffage des cuves C1, C2 et du réacteur de méthanisation C5 sont commandés par une unité de commande non représentée qui est associée à au moins un programme paramétrable représentant les conditions de fonctionnement théoriques de l'installation de traitement de l'effluent.

Le fonctionnement de l'installation de traitement de l'effluent va maintenant être décrit.

L'effluent E est admis dans la première cuve C1 au travers du séparateur S1. La fraction solide est utilisée comme compost. Le pH de l'effluent est élevé à pH12 par le dispositif de régulation R1 de pH. Les composés gazeux produits par l'effluent sont traités par le laveur chimique L1 et la solution ammoniacale produite est injectée de préférence séquentiellement dans la seconde cuve C2.

Parallèlement, la boucle de circulation installée sur la première cuve C1 favorise le dégazage dudit effluent.

A l'issue de cette phase de dégazage, la vanne motorisée V1 est basculée dans sa seconde position. L'effluent est alors envoyé dans le seconde cuve C2 en passant par le préfiltre PF1. Celui-ci retient la matière organique qui est transférée par la pompe PM1 dans le réacteur de méthanisation C5. La seconde cuve C2 est utilisée comme réservoir tampon lors du déroulement d'un cycle de concentration de l'effluent dans la troisième cuve C3.

Le cycle de concentration dans la troisième cuve C3 s'opère de la manière suivante. L'effluent contenu dans la seconde cuve C2 est transféré par l'intermédiaire de la pompe de gavage P2 et des pompes P3, P4 dans l'unité d'ultrafiltration UF1. Le perméat de l'effluent filtré par l'unité d'ultrafiltration UF1 est transféré dans la troisième cuve C3 pour y être concentré. Puis, le remplissage de la troisième cuve C3 étant obtenu, la vanne V3 est basculée dans sa seconde position permettant alors à l'effluent contenu dans la seconde cuve C2 de circuler en boucle dans celle-ci en attente de la fin du cycle de concentration opéré dans la troisième cuve C3.

La pompe P5 est ensuite mise en service et le retentat contenu dans la troisième cuve C3 est envoyé vers l'unité de nanofiltration NF2 par osmose inverse. Le retentat filtré par l'unité de nanofiltration NF2 par osmose inverse est réinjecté dans la troisième cuve C3. Lorsque la concentration du retentat contenu dans la troisième cuve C3 atteint un seuil convenu, la troisième cuve C3 est vidangée dans le conteneur T2, et un autre cycle de concentration peut alors débuter à nouveau.

Le procédé de traitement d'un effluent de l'invention permet d'extraire une partie en eau en forte proportion, de l'ordre de 40 %, d'un effluent avant digestion anaérobie de l'effluent et de l'ordre de 90 % après nanofiltration par osmose inverse.

L'effluent à traiter est ainsi fractionné en un compost, une solution fertilisante de type NPK, en gaz méthane, et en eau non déminéralisée.

La taille du réacteur de méthanisation peut être réduite, et la consommation d'énergie nécessaire au chauffage de l'effluent est réduite.

La densité accrue de matière organique dans le réacteur de méthanisation accroît le rendement de la production de méthane.

## Revendications

1. Procédé de traitement d'un effluent tel qu'un effluent agricole ou un effluent industriel par digestion anaérobie et du type consistant à :
- introduire l'effluent dans au moins une cuve (C1, C2) après séparation de la partie solide de l'effluent par un séparateur (S1), pour permettre une première extraction des composés azotés gazeux,
- transférer l'effluent vers au moins une cuve (C2) au travers d'un préfiltre (PF1) chargé de retenir la matière organique nécessaire à la méthanisation pour la transférer dans un réacteur de méthanisation (C5) fonctionnant par digestion anaérobie, **caractérisé en ce que** le procédé comprend en outre l'étape de :
- concentrer la partie liquide résiduelle de l'effluent par filtration dans une unité d'ultrafiltration (UF1) et/ou une unité de nanofiltration (NF2) par osmose inverse dans au moins une cuve (C3) raccordée en aval de la cuve (C1, C2).

2. Procédé de traitement d'un effluent selon la revendication 1, **caractérisé en ce que** pendant l'étape de concentration de l'effluent dans la cuve (C3), la cuve (C2) est utilisée comme réservoir tampon.

3. Procédé de traitement d'un effluent selon la revendication 1 ou 2, **caractérisé en ce que** le perméat rejeté par l'unité d'ultrafiltration (UF1) est séquentiellement transféré dans le préfiltre (PF1) pour participer à son rétrolavage avant d'être transféré dans le réacteur de méthanisation (C5).

4. Procédé de traitement d'un effluent selon la revendication 1 ou 2, **caractérisé en ce que** le perméat rejeté par l'unité d'ultrafiltration (UF1) est séquentiellement transféré dans le réacteur de méthanisation (C5).

5. Procédé de traitement d'un effluent selon l'une des revendications précédentes, **caractérisé en ce qu'**il met en oeuvre un laveur chimique (L1) collectant les composés gazeux produits par l'effluent dans les cuves (C1-C3), la solution ammoniacale récupérée en sortie du laveur chimique (L1) étant injectée séquentiellement dans la cuve (C1) et/ou (C2).

6. Procédé de traitement d'un effluent selon l'une des revendications précédentes, **caractérisé en ce qu'**il met en oeuvre une boucle de circulation associée à la cuve (C1) et/ou (C2) et qui est pourvue notamment d'un dispositif de régulation (R1) de pH utilisant une solution basique provenant du lavage de membranes de nanofiltration de l'unité de nanofiltration (NF2) par osmose inverse.

7. Installation de traitement d'un effluent tel qu'un effluent agricole ou un effluent industriel par digestion anaérobie, l'installation comportant au moins une cuve (C1, C2) destinée à permettre une première extraction des composés azotés gazeux, la cuve (C1, C2), raccordée à un préfiltre (PF1) chargé de retenir la matière organique nécessaire à la méthanisation, le préfiltre (PF1) étant raccordé à un réacteur de méthanisation (C5) fonctionnant par digestion anaérobie, **caractérisée en ce qu'**elle comprend en outre une cuve (C3) raccordée en aval de la cuve (C1, C2) ainsi qu'une unité d'ultrafiltration (UF1) et/ou une unité de nanofiltration (NF2) par osmose inverse destinée à permettre la concentration par filtration de la partie liquide résiduelle de l'effluent dans ladite cuve (C3).

8. Installation de traitement d'un effluent selon la revendication 7, **caractérisée en ce que** la collecte du perméat de l'effluent filtré par l'unité d'ultrafiltration (UF1) est raccordée à la cuve (C3).

9. Installation de traitement d'un effluent selon la revendication 7 ou 8, **caractérisée en ce que** la collecte du retentat, de l'effluent filtré par l'unité de nanofiltration (NF2) par osmose inverse est raccordée à la cuve (C3) permettant la circulation en boucle de l'effluent dans la cuve (C3).

10. Installation de traitement d'un effluent selon l'une des revendications 7 à 9, **caractérisée en ce qu'**elle comporte un laveur chimique (L1) collectant les composés gazeux produits par l'effluent dans les cuves (C1-C3).

11. Installation de traitement d'un effluent selon l'une des revendications 7 à 10, **caractérisée en ce qu'**une vanne (V7) de type motorisé est interposée sur le circuit de retour du retentat filtré vers la cuve (C3) pour permettre la régulation de la pression du retentat filtré à l'intérieur des membranes de filtration de l'unité de nanofiltration (NF2) par osmose inverse.
